# EUROPEAN PATENT APPLICATION

(11) **EP 1 911 380 A1**
(43) Date of publication of application: **16.04.2008**
(21) Application number: 07019608.4
(22) Date of filing: 08.10.2007
(51) Int. Cl.: A47J 31/36

(54) **Rotating sprayer-injector for espresso coffee machines**

(30) Priority: 13.10.2006 IT MI20061964
(71) Applicant: Bianchi Vending Group S.P.A., 24040 Zingonia di Verdellino (BG) (IT)
(72) Inventor: Piloni, Ernesto, 23900 Lecco (IT)
(74) Representative: Pipparelli, Claudio

(57) **Abstract**

An infusion dispenser device for espresso coffee machines designed for the use of capsules of aromatic powder for the preparation of said infusions comprises a dispenser head (T) integral with said machine and a filter holder (P), connected to said head (T) by means of a coupling device which can be combined with and detached from said head by a rotary movement of the filter holder (P) around the axis of the head (T).

Said filter holder (P) comprises a handle (M) for movement, a cup-shaped container (B) for the capsules of aromatic powder, a spout (R) for dispensing said infusions, a capsule piercing disc (D), housed in the container, in the end adjacent to the spout (R), provided with pointed elements on its surface facing towards the head (T), which comprises a fluid injector for supplying water to the capsule, coaxial with the head, also provided with pointed elements (3) on its surface facing towards said spout (R), freely rotating around the axis (O-O) of said head.

## Description

The present invention concerns an espresso coffee machine, in particular a professional type machine suitable for use with capsules.

Coffee machines are well-known in common use; many models exist, all designed to meet the needs of an increasingly demanding public in terms of quality and flavour of espresso coffee.

The design criteria of said machines are constantly updated by the demands of users in search of espresso coffee with superlative flavour and quality, in particular with a very creamy consistency which, in the past, was difficult to obtain on a regular basis; it has been found, in fact, that the organoleptic characteristics of espresso coffee depend significantly on the grinding, the quantity used and the storage conditions of the coffee powder, i.e. its temperature and degree of humidity.

These conditions can also vary significantly in each cup of coffee made, depending on the ability of the operator, ambient temperature and humidity, and it is therefore difficult to maintain them constant over time.

To overcome these difficulties, it has become necessary to facilitate preparation of the drink, also to reduce the time required.

For said purpose capsules have been introduced onto the market.

These capsules contain a pre-measured quantity of coffee or other powder for infusions (tea, camomile etc.), and are kept individually sealed and closed in an airtight bag containing one or two single/double-dose capsules, sealed from the external environment; the bag is opened only when the capsules are required for use, thus retaining all the freshness of the product.

Consequently, espresso coffee machines have been modified for the use of these capsules.

Coffee machines generally comprise a dispenser unit kept at the required temperature, the job of which is to provide hot water at the right temperature and pressure, combined with a removable device which acts as a container for the capsules, well-known and indicated hereinafter as filter holder.

By means of a sprayer integral with the dispenser unit, the water is conveyed in a uniform manner to the filter holder below.

The filter holder generally comprises two or more protruding tabs for bayonet connection to the dispenser unit.

Said fixing is performed manually by a rotary movement of the filter holder around the axis of the dispenser unit: this rotation also causes axial shifting of the filter holder towards the dispenser unit, consequently coupling them.

In particular the filter holder comprises a handle for movement, a cup-shaped container for housing the capsule and a spout for dispensing the drink into the cup.

On the bottom of the filter holder a piercing disc is provided for said capsules, provided with pointed elements on its surface facing towards the dispenser unit.

A fluid injector is fixed axially to the dispenser unit for supplying water to the capsule, provided with pointed elements on its surface facing towards the spout.

The capsule of aromatic powder is placed in the filter holder and the latter is fitted on the dispenser unit, as described previously, by rotating the handle until it locks.

The piercing procedure can differ according to the type of capsule used.

Basically two types of capsule exist, those that release the extract following simultaneous piercing of the two opposite surfaces and those that are pierced first in the upper part and then in the lower part, following collapse of the bottom of the capsule caused by introduction of the water under pressure.

In the first case, during connection of the filter holder to the dispenser unit, the metal sheet of the capsule is pierced simultaneously by the pointed elements of the injector (fitted on the unit) and by the piercing disc fitted in the filter holder, with consequent piercing of both the top and bottom of the capsule.

In the second case, during connection of the filter holder to the dispenser unit, only the pointed elements of the injector penetrate the metal sheet of the capsule, with consequent piercing of the upper part of the capsule. The bottom of the capsule is pierced only after injection of the water under pressure which causes the collapse of said bottom against the pointed elements of the piercing disc fitted in the filter holder, with consequent piercing also of the lower part of the capsule.

At this point the injector dispenses the hot water under pressure which penetrates into the capsule via the holes on the upper surface, crosses it and comes out of the holes on the lower surface, after extracting from the powder the aromatic substances that create the drink, flowing into the cup via the spout.

Once the drink has been dispensed, the filter holder and the capsule are dried, removing the excess water present in the capsule and in the filter holder by means of a semi-automatic action controlled by a lever or an automatic action controlled by a 2-way solenoid valve.

During studies and practical tests, the Applicant has perceived the existence of a technical problem depending on the fact that, following the rotary movement of the filter holder for connection to the dispenser unit, the pointed elements on the injector and on the piercing disc tear the upper and lower surfaces of the capsule, excessively widening the holes out of which the powder flows. This problem affects the quality of the product extracted as the powder is dispersed both during extraction of the drink and in said drying phase, resulting in the presence of powder in the cup.

The problem has been substantially solved by the invention of a rotating injector which permits the production of an excellent cup of coffee.

The invention therefore concerns an injector which simultaneously sprays and pierces, freely rotating around the axis of the dispenser unit, according to the characteristics specified in the characterising part of the first claim, so as not to tear the capsule in both the upper and lower part.

Further characteristics and advantages of said injector will become evident from the description of two alternative but not exclusive embodiments of the device according to the present invention.

Said description will be illustrated below with reference to the accompanying drawings, provided only by way of non-limiting example, in which:
- figure 1 illustrates, in an exploded view, a dispenser unit complete with filter holder ready for dispensing the drink;
- figure 2 illustrates, in axial section, partially sectioned, a detail of the dispenser unit completed with the injector according to the present invention in a preferred embodiment;
- figure 3 illustrates, in axial section, partially sectioned, a detail of the dispenser unit completed with the injector according to the present invention in an alternative embodiment;
- figure 4 illustrates, in an exploded perspective view, the injector of figure 2 in said preferred embodiment;
- figure 5 illustrates, in an exploded perspective view, the injector of figure 3 in said alternative embodiment;
- figure 6 illustrates, in a perspective view, a detail of the injector according to the invention in three different embodiments.

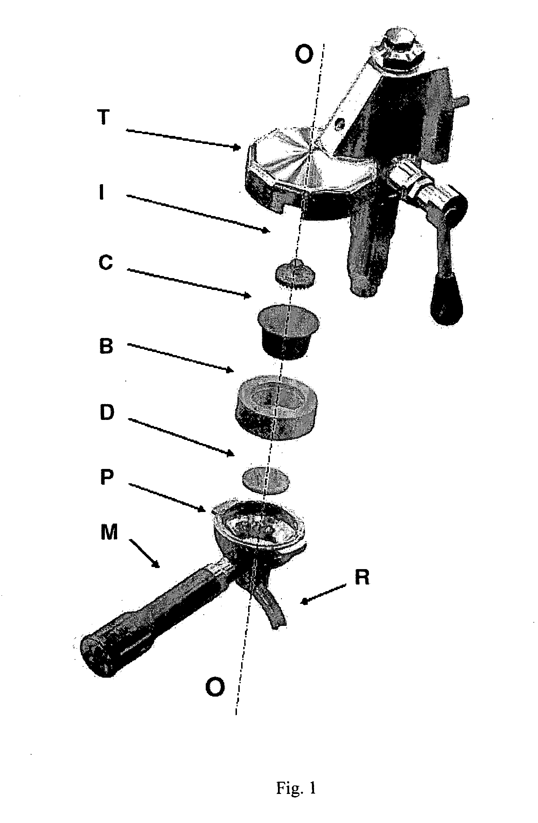

With reference to figure 1 the dispenser device according to the invention comprises, in a per se known manner, a dispenser unit T, fitted on an espresso coffee machine, not illustrated, a filter holder P, of the commonly known type, comprising a roughly semi-spherical cup provided on the outside of its circular edge with two or more tabs for connection, by means of a bayonet fitting, to said dispenser unit, a handle M to facilitate rotation of the filter holder, a spout R to pour the extracted product into the cup and a cup-shaped container B, hereinafter called beaker, inserted in the semi- spherical cup. On the bottom of the beaker, at the end adjacent to the spout, a piercing disc D is positioned, provided with pointed elements on its surface facing towards the dispenser unit.

The above-mentioned unit is provided with an injector I, subject of the present invention, also having pointed elements on its surface facing towards the spout. Figure 1 illustrates a capsule C of aromatic powder chosen according to the type of infusion required, for example coffee, decaffeinated coffee, barley coffee, tea, camomile, which is placed in the beaker B for preparation of the relative infusion according to the procedure already described.

In the present description terms such as upper, lower, radially and axially internal and external refer to the dispenser device positioned as in figure 1 and to the rotation axis O-O.

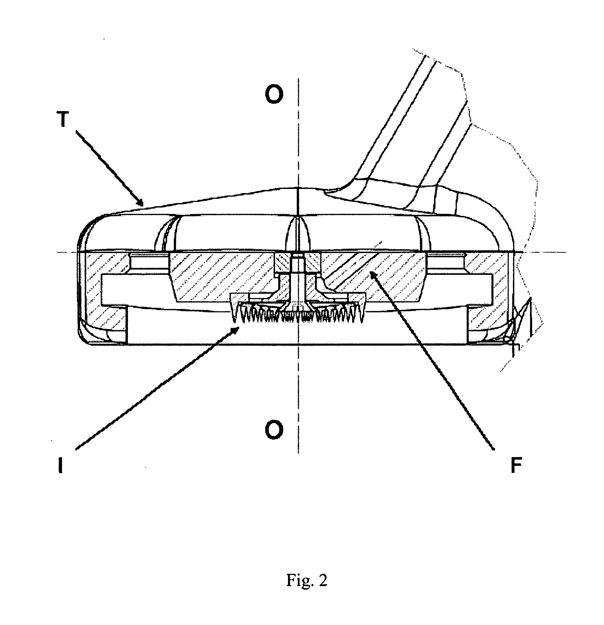

Figure 2 illustrates a dispenser unit T, partially sectioned according to an axial plane to highlight the area along the axis O-O where the injector I is mounted in a first embodiment.

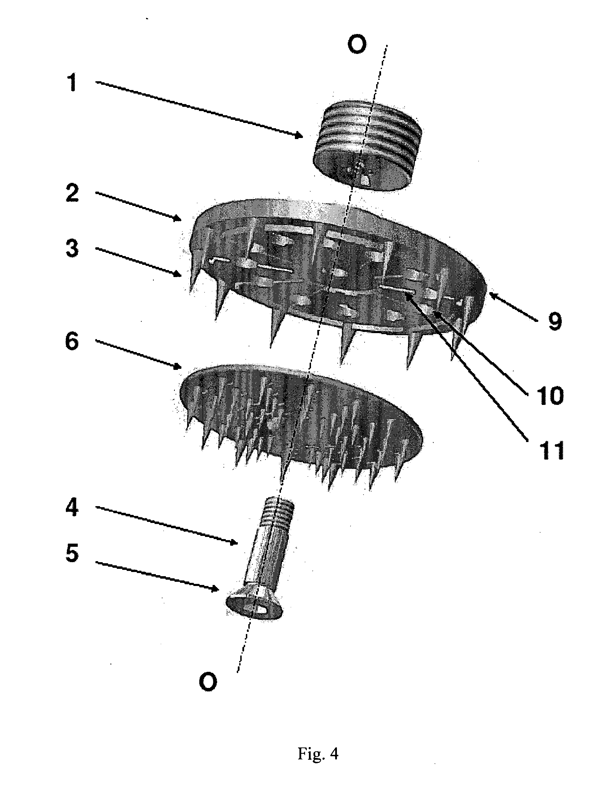

This injector I (figure 4) substantially comprises a reducer 1 coaxial with the axis O-O with upper end integrally coupled with said unit in a per se known manner.

On the opposite lower end of the reducer a plate 2 is fitted which, in the embodiment illustrated in said figure, rotates freely around the axis of said reducer. Said plate has a lower surface, facing towards the filter holder, provided with a plurality of pointed elements 3. Preferably, said plate rotates freely around a stem 4, coaxial, having an end integral with the reducer 1.

The opposite end of the above-mentioned stem is provided with a flared head 5 which retains the plate 2, inserted on the stem 4.

Preferably, this stem 4 consists of a fastening screw which is coupled to the reducer 1 by screw-connecting its threaded end in a threaded seat obtained in said reducer.

The above-mentioned plate 2 is preferably disc-shaped: preferably, said disc comprises a peripheral annular portion 8, hereinafter defined crown, and a central portion 9. The lower surface of the crown 8 is provided with a series of pointed cutting elements 3 shaped like teeth, tips, needles or blades.

The central portion 9 is provided with a series of through holes 10 which join the two surfaces, upper and lower, of the plate 2. Preferably, the lower surface of the plate 2 also comprises a series of radial channels 11 which connect said holes 10 to the base of said pointed elements 3.

The dispenser unit T 1 comprises at least one hole F to supply water under pressure to the upper surface of the plate 2 and from the latter, via the holes 10, to the surface of the capsule C.

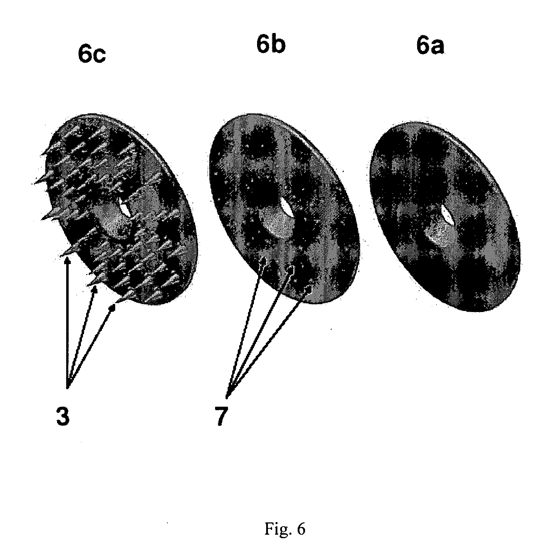

On the stem 4, below the plate 2, a "shower head" type dispenser disc 6 is preferably also inserted for distribution of the water under pressure in a pre-established manner on the upper surface of the capsule. Preferably the above-mentioned disc has on its surface facing towards the filter holder a central axial depression, i.e. (figure 6) a concavity housing the flared head 5 of the stem, or of the fastening screw, which, preferably, must not protrude from the bottom of the surface of the disc facing towards the filter holder. Preferably, the disc 6 also rotates freely around the stem 4.

The above-mentioned flared head 5 constitutes a stop for the axial movements of the plate 2 and the disc 6 along the stem 4, made possible by their freedom of rotation around said stem.

The above-mentioned disc can have at least three different embodiments, illustrated in figure 6 as 6a, 6b, and 6c respectively, according to the type of extract to be produced. In accordance with a first embodiment, the disc 6 is a blind disc 6a, i.e. without through holes. In this case the water under pressure that comes out of the holes 10 of the plate 2 is conveyed along the edge of the disc 6a at the level of the pointed elements 3 provided on the lower surface of the crown 8.

In a second embodiment (6b) this disc has a plurality of through holes 7 between the two surfaces, lower and upper. In this case the water under pressure that comes out of the holes 10 of the plate 2 is distributed through said holes 7 onto the whole of the upper surface of the capsule C.

In a third embodiment (6c) the disc has a plurality of pointed elements, again identified by 3, uniformly distributed on the lower surface of said disc. In this case the entire upper surface of the capsule C is simultaneously pierced by the elements 3 present on the crown 8 and on the disc 6c.

The disc 6 can be produced according to further alternative embodiments, for example like a blind disc 6a provided with pointed elements 3 or as a disc 6c simultaneously provided also with through holes 7.

The dispenser unit T, illustrated in figure 2, has been partially sectioned according to an axial plane, to highlight the injector I provided with the disc 6c.

Figure 4 illustrates, in an exploded perspective view, the injector according to the invention fitted on the unit T of figure 2, comprising the reducer 1, the plate 2, freely rotating around the axis of the same, the disc 6c and the retaining screw 4.

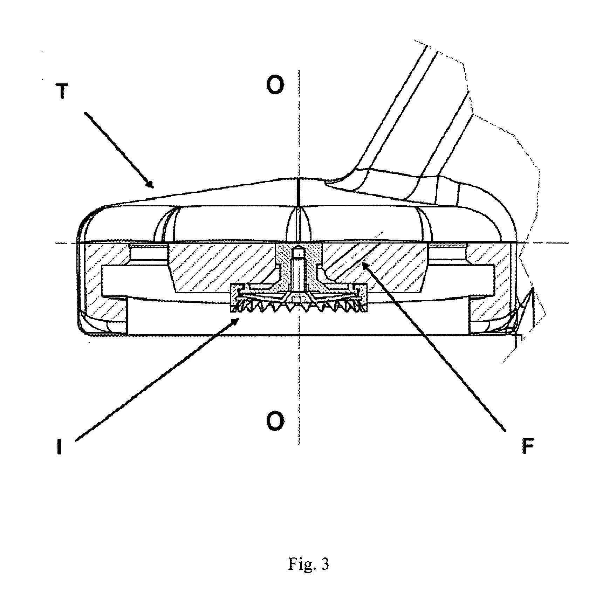

The dispenser unit T, illustrated in figure 3, has been partially sectioned according to an axial plane, to highlight the injector I provided with the disc 6a.

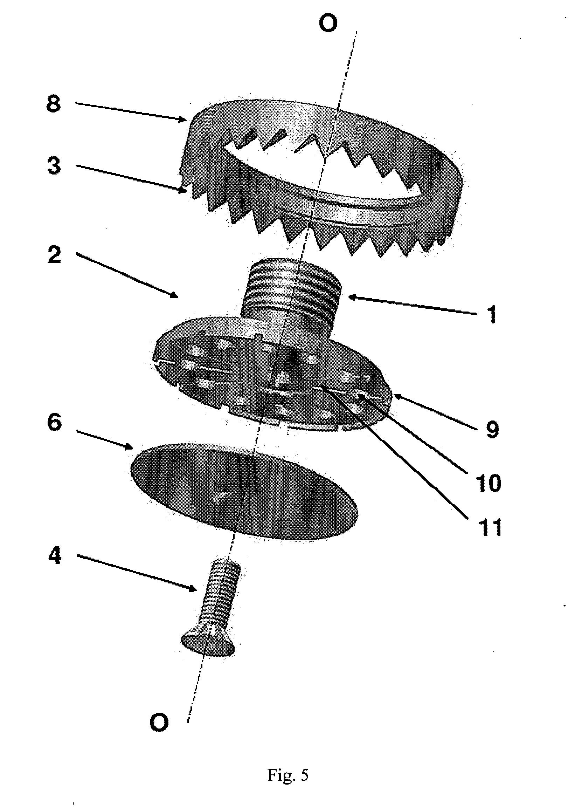

Figure 5 illustrates, in an exploded perspective view, the injector fitted on the unit T of figure 3, in a preferred variation of the invention, provided with the disc 6 in the version 6a. According to said variation the crown 8 is separate from the central portion 9 of the plate 2 and rotates freely around said central portion which, in this case, remains preferably integral with the reducer 1. This solution provides the advantages of the invention without having to modify the already known structure of the central portion of the injector, in particular of the reducer 1 integral with the central portion 9 of the plate 2.

It is now easy to understand operation of the device according to the invention: as a result of the rotary coupling movement of the filter holder on the dispenser unit, the pointed elements 3 of the crown 8, those of the disc 6, if present, and those of the piercing disc D penetrate the capsule C piercing the upper and lower surfaces.

However, according to the invention, the freedom of rotation of the injector, in particular of the plate 2, or of the relative crown 8, and of the disc 6 in the version 6c, each around its own axis, allows the above-mentioned injector to rotate together with the capsule, following the rotation of the filter holder, during penetration of the elements 3 into its upper surface so that said surface is not torn but only pierced.

Also the lower surface of the capsule is only pierced and no longer torn, since the invention eliminates any relative rotation between the capsule and the piercing disc D.

Simultaneously the hot water under pressure delivered by the dispenser unit flows from the upper surface of the plate 2 to the lower surface, through the holes 10, and is distributed on the upper surface of the capsule depending on the embodiment, blind or perforated, used for the disc 6. In particular, the channels 11 take the water directly to the base of the pointed elements 3 on the crown 8. The water crosses the capsule, extracting from the powder all the aromatic substances of the infusion and flows out of the capsule via the holes provided in its lower surface by the pointed elements of the perforation disc D.

To conclude, the uniform injection of water under pressure through the pierced areas of the capsule guarantees complete soaking of the powder and therefore the quality of the infusion.

Furthermore, according to the invention, the pointed elements 3 which penetrate the sheet metal of the capsule constitute stoppers which plug the corresponding holes, permitting passage of the water but keeping the powder inside so that it cannot disperse in the surrounding environment, flowing into the beaker B and into the cup placed below the spout.

The invention solves the problem posed and has further advantages: in particular, elimination of tearing of the metal sheet of the capsule by the pointed elements has made it possible to modify as required the shape and number of said elements which can, for example, be increased in quantity and reduced in dimension, thus facilitating more uniform penetration of the water inside the capsule, thereby increasing the quality of the drink obtained.

The present description does not illustrate all the possible structural and dimensional alternatives to the embodiments of the invention specifically described.

These variations are understood to be all included under the protection of the present patent, said alternative forms being in themselves easily identifiable from the description provided here of the link between each embodiment and the result the invention aims to achieve.

## Claims

1. An infusion dispenser device for espresso coffee machines designed for the use of capsules of aromatic powder for the preparation of said infusions, comprising a dispenser unit integral with said machine and a filter holder, connected to said dispenser unit by means of a coupling device which can be combined with and detached from said unit by a rotary movement of said filter holder around the axis of said unit, said filter holder comprising a handle for movement, a cup-shaped container for said capsules, a spout for dispensing said infusions, a capsule piercing disc, housed in said container in the end adjacent to said spout, provided with pointed elements on its surface facing towards said dispenser unit, said unit comprising a fluid injector for supplying water to said capsule, coaxial with said unit, said fluid injector being provided with pointed elements on its surface facing towards said filter holder, **characterised in that** said injector comprises pointed elements (3) freely rotating around the axis of said dispenser unit.

2. Device as claimed in claim 1, **characterised in that** said injector comprises a reducer (1) coaxial with the axis O-O of said dispenser unit, having the upper end coupled integrally with said dispenser unit and the lower end coupled with a plate (2), with the surface facing towards said filter holder combined with said plurality of pointed elements (3).

3. Device as claimed in claim 2, **characterised in that** said lower end of the reducer (1) comprises a coaxial stem (4), having one end integral with said end of the reducer, the opposite end of the above-mentioned stem being provided with a flared head (5) which axially retains said plate (2) inserted on said stem (4).

4. Device as claimed in claim 2, **characterised in that** said plate (2) is provided with axial through holes (10) which join the two surfaces, upper and lower, of said plate (2).

5. Device as claimed in claim 2, **characterised in that** the lower surface of said plate (2) comprises a series of radial channels (11) which connect said holes (10) to the base of said pointed elements (3).

6. Device as claimed in claim 2, **characterised in that** said plate (2) has the shape of a disc which comprises an annular peripheral crown (8) and a central portion (9), said disc freely rotating around said axis O-O, the lower surface of said crown (8) being provided with said plurality of pointed elements (3) facing towards said filter holder.

7. Device as claimed in claim 2, **characterised in that** said plate (2) has the shape of a disc which comprises an annular peripheral crown (8) and a central portion (9), said crown (8) being separate from the central portion (9) and rotating freely around said central portion (9).

8. Device as claimed in claim 2, **characterised in that** on the lower end of said reducer (1), below the plate (2), a disc (6) is fitted for distributing the fluid to the upper surface of said capsule.

9. Device as claimed in claim 8, **characterised in that** said disc (6) has on its lower surface a central axial depression, which houses said flared head (5).

10. Device as claimed in claim 8, **characterised in that** said distributor disc (6) rotates freely around said end of the reducer (1).

11. Device as claimed in claim 8, **characterised in that** said distributor disc (6) is a blind disc.

12. Device as claimed in claim 8, **characterised in that** said distributor disc (6) comprises a plurality of through holes (7) between its two surfaces, lower and upper.

13. Device as claimed in claim 8, **characterised in that** said distributor disc (6) comprises a plurality of pointed elements (3) on its lower surface.
